# EUROPÄISCHE PATENTSCHRIFT

(11) **EP 2 367 417 B1**
(45) Veröffentlichungstag und Bekanntmachung des Hinweises auf die Patenterteilung: **28.11.2012**
(21) Anmeldenummer: 09743858.4
(22) Anmeldetag: 22.10.2009
(51) Int. Cl.: A01K 61/00, A01K 75/00

(54) **NETZ, INSBESONDERE FÜR EINEN KORB FÜR FISCHZUCHT SOWIE EIN VERFAHREN UND VORRICHTUNG ZUR DESSEN HERSTELLUNG**
NET, IN PARTICULAR FOR A BASKET FOR PISICULTURE AND A METHOD AND DEVICE FOR PRODUCTION THEREOF
FILET CONÇU EN PARTICULIER POUR UN PANIER DE PISCICULTURE, ET PROCÉDÉ ET DISPOSITIF DE PRODUCTION CORRESPONDANT

(30) Priorität: 28.10.2008 CH 16922008
(43) Veröffentlichungstag der Anmeldung: 28.09.2011
(73) Patentinhaber: Geobrugg AG, 8590 Romanshorn (CH)
(72) Erfinder: ATZ, Jürg, 9526 Zuckenried (CH); WARTMANN, Stephan, 8592 Uttwill (CH)
(74) Vertreter: Luchs, Willi
(86) Internationale Anmeldenummer: PCT/EP2009/007558
(87) Internationale Veröffentlichungsnummer: WO 2010/049089

(56) Entgegenhaltungen:
- WO-A-96/13973
- WO-A-97/13407
- WO-A-99/43894
- WO-A-2009/089970
- CA-A1- 997 230
- FR-A- 2 533 112
- GB-A- 166 828

## Beschreibung

Die Erfindung betrifft ein Netz gemäss dem Oberbegriff nach Anspruch 1, sowie ein Verfahren und Vorrichtung zu dessen Herstellung.

Es ist bekannt, für die Fischzucht aus Netzen bestehende Körbe zu verwenden (vgl. beispielsweise JP 2002 045084 oder WO 96 13973). Das aus Kunststoff bestehende Netz ist an den Kreuzungsstellen in der Regel verknotet, besitzt in der Regel einen Seildurchmesser von ca. 2-8 mm und muss relativ kleine Maschenöffnungen von ca. 10-30mm aufweisen. Durch die entsprechend grosse ,Materialoberfläche' besteht die Gefahr, dass sich in diesen Maschen, Tiere und Pflanzen wie z.B. Algen, Seegras, Moos, Muscheln, etc. verfangen, festhalten oder anwachsen, wodurch die Durchlässigkeit des Netzes und somit die Fischzucht beeinträchtigt wird, da damit der Nährstoffzufluss sowie die Sauerstoffversorgung ungenügend erfolgt.

Druckschrift GB-A-166 828 bezieht sich auf ein knotenloses Netz zum Fischen oder ähnlichen Zwecken. Bei diesem Netz besteht bereits insofern ein Unterschied, als es nicht für einen Korb für Fischzucht vorgesehen ist, sondern zum Fangen von Fischen. Es ist dementsprechend auch aus gewundenen Schnüren hergestellt, welche sich aber aufgrund der Oberflächen bei den Windungen nicht als Körbe für Fischzucht eignen, weil sich bei diesen eine Verschmutzung bzw. Verstopfung aufdrängt, da die Oberflächen der Schnüre den Schmutz vielmehr festhalten als abstossen. Solche Netze zum Fischen müssen in der Regel zusammenlegbar ausgebildet sein und daher solche schnurartig geflochtene Netze.

In der Druckschrift WO-A-97/13407 ist ein Schleppnetz geoffenbart, welches über einen korbartigen Maschenaufbau verfügt und aus gewundene Litzen aufweist, die an den Verbindungsstellen mit den benachbarten Litzen durch Knöpfe oder Verbindungsstücke zusammengehalten sind. Es sind somit ebenso schnurartige Netze gelehrt, welche zum Fischen, aber nicht für einen Fischzucht mit einem stationären Korb geeignet sind.

Aus der EP-B-0 979 329 ist ein hochfestes Drahtgeflecht für einen Steinschlagschutz oder für die Sicherung einer Erdoberflächenschicht bekannt, dass aus wendelförmig gebogenen, aus hochfestem Stahl bestehenden Drähten geflochten ist und dreidimensionale Struktur aufweist. Die wendelförmig gebogenen Drähte weisen einen Steigungswinkel sowie eine Länge zwischen zwei Biegungen auf, welche die Form und Grösse der Maschen des Drahtgeflechtes bestimmen.

Das Drahtgeflecht wird in einem Verfahren hergestellt, bei dem der Draht unter dem definierten Steigungswinkel zu einem Biegedorn zugeführt und in der definierten Länge um den Biegedorn um etwas über ca. 180° gebogen wird, wobei der Draht mehrmals in seiner Längsachse zum Biegedorn um die definierten Länge nachgeschoben und jeweils um den Biegedorn gebogen werden muss. Das Verfahren und die dazu benötigte Vorrichtung ist relativ kompliziert und entsprechend teuer.

Der vorliegenden Erfindung liegt die Aufgabe zugrunde, ein Netz der eingangs genannten Art zu schaffen sowie ein Verfahren zur kostengünstigen Herstellung desselben vorzuschlagen, mit dem die Gefahr der Verschmutzung und Verstopfung des Netzes vermindert werden kann.

Diese Aufgabe wird erfindungsgemäss durch ein Netz mit den Merkmalen des Anspruches 1 sowie durch ein Verfahren nach Anspruch 9 gelöst.

Bevorzugte Weitergestaltungen des erfindungsgemässen Netzes und des erfindungsgemässen Verfahrens auch für andere Anwendungen wie beispielsweise in der Architektur bilden den Gegenstand der abhängigen Ansprüche.

Das erfindungsgemässe, als ein Drahtgeflecht ausgebildete Netz, welches aus einzelnen wendelförmig gebogenen metallenen Längselementen zu einer zylinderförmigen Raumspirale herstellbar ist, und bei dem die benachbarten Spiralen ineinandergedreht werden, ist herstellungstechnisch einfach und kostengünstig. Die insbesondere als Drähte vorgesehenen Längselemente werden kontinuierlich zu den zylinderförmigen Raumspiralen gebogen. Vorteilhafterweise können mehrere Drähte bzw. Spiralen gleichzeitig erzeugt und ineinandergedreht werden.

Das vorzugsweise aus rostfreiem oder aus korrosionsbeständigem Stahl bestehende Drahtgeflecht ist bezüglich der Verschmutzung und Verstopfung sowie dem Anwachsen durch Tiere und/oder Pflanzen wie Algen, Seegras, Moos, Muschelarten, etc. wesentlich weniger anfällig als herkömmliche Netze aus Kunststoff oder nicht entsprechend beschichtete Netze aus anderen Materialien.

Diesbezüglich besonders vorteilhaft kann auch die Verwendung von Drähten aus kupferbeschichtetem Stahl für das Drahtgeflecht sein. Anstelle der Kupferbeschichtung eignen sich auch verschiedene Kupferlegierungen sowie kupferhaltige Cladding-Beschichtungen. Ebenso eignen sich spezielle abweisende Kunststoffbeschichtungen zur Verhinderungen dieser Verstopfungen und Bewuchs.

Ein solches Netz kann auch dynamische Kräfte aufnehmen sowie kinetische Energien absorbieren, wodurch es auch für Abbremsvorgänge im Naturgefahrenbereich, in der Sicherheitstechnik, für Splitterschutz sowie für weitere Schutzanwendungen und Schutzeinrichtungen verwendet werden kann.

Die vorzugsweise Verwendung von hochfesten Drähten mit Nennfestigkeiten von ca. 1000 N/mm² - 2800 N/mm² ermöglicht durch entsprechende Gewichtsreduzierung massgebliche Anwendungsvorteile und Material- sowie Kosteneinsparungen, beispielsweise grössere Körbe sowie infolge der geringeren ,Materialoberfläche' weniger Haftfläche für Wassertiere und Wasserpflanzen, wie beispielsweise Algen, Seegras, Moos, Muscheln, etc.

Die Erfindung wird nachfolgend anhand der Zeichnung näher erläutert. Es zeigen:
- Fig. 1: einen im Wasser gelegten Korb mit einem erfindungsgemässen Netz in schematischer perspektivischer Ansicht,
- Fig. 2: einen Teil eines erfindungsgemässen Netzes in Draufsicht;
- Fig. 3: den Netzteil nach Fig.2 in Seitenansicht,
- Fig. 4: den Netzteil nach Fig.2 in Seitenansicht, bei welchem das Drahtgeflecht flachgedrückt ist, und
- Fig. 5: eine perspektivische Ansicht eines Ausschnittes einer Vorrichtung für das Zusammendrücken von wendelförmig gebogenen Drähten.

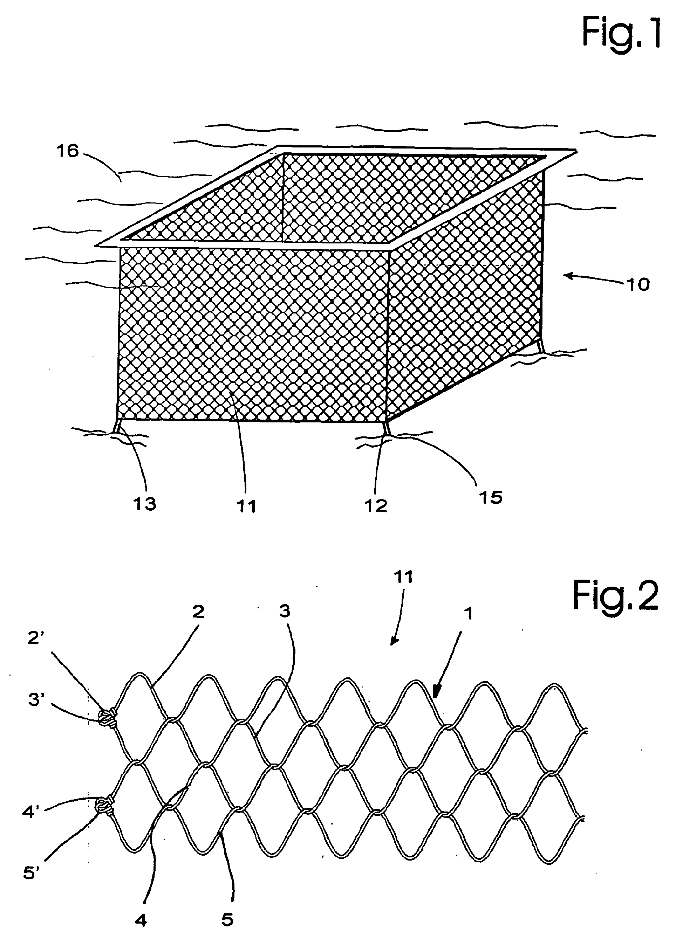

Fig. 1 zeigt einen schematisch veranschaulichten Korb 10, welcher vorliegend im Wasser 16 befindlich ist und insbesondere für den Fischzucht dienen soll. Der Korb 10 ist aus einem Netz 11 gebildet und vorzugsweise am Meeresboden 15 durch Befestigungsmittel 12, 13 fixiert und dieser erstreckt sich oben bis an die Wasseroberfläche. Je nach Wassertiefe, Strömungen, Gezeitenhub und Bodenbeschaffenheiten gibt es auch schwimmende Versionen mit andere Befestigungsarten am Grund oder Land respektive Kombinationen davon.

Dieser Korb 10 ist vorliegend rechteckig ausgebildet, er kann aber selbstverständlich auch eine andere Form aufweisen. Der Korb kann hierbei aus verschiedene Formen gebildet sein, beispielsweise auch rund sowie eckig oder polygonförmig. Ebenso ist es für gewisse Anwendungen vorteilhaft, wenn der Korb auch unten und/oder oben geschlossen werden kann. Je nach Brutphase können auch kleinere Körbe in grösseren Körben positioniert werden, wobei unterschiedliche Maschengrössen vorgesehen sein können.

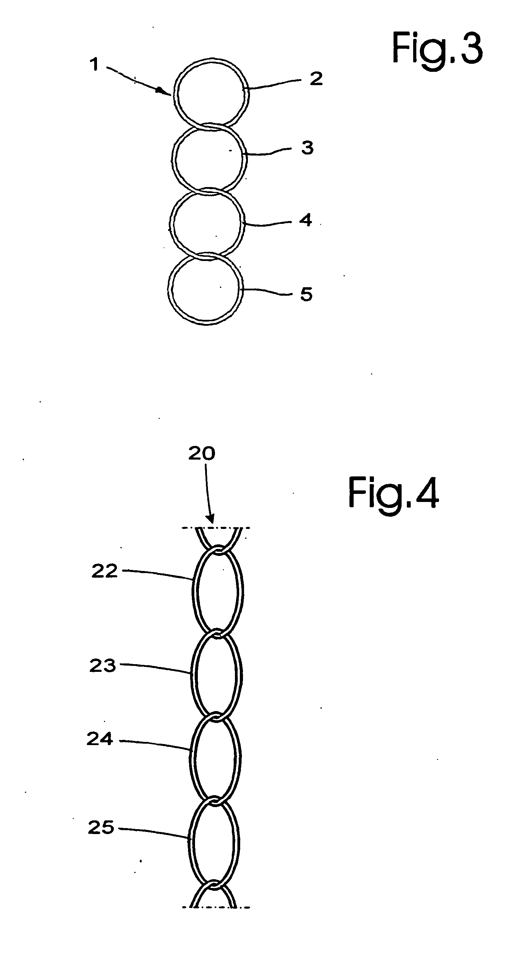

In Fig. 2 und Fig. 3 ist ein Teil des Netzes 11 dargestellt, das für den Korb 10 bestimmt ist. Das Netz ist erfindungsgemäss als ein Geflecht 1 ausgebildet, das aus einzelnen wendelförmig gebogenen metallenen Drähten 2, 3, 4, 5 als Längselemente besteht. Die auf eine bestimmte Länge geschnittenen Drähte 2, 3, 4, 5 werden erfindungsgemäss kontinuierlich zu Zylinderformen gebogen (vgl. insbesondere Fig. 3), wobei die benachbarten Drähte 2, 3; 3, 4; 4, 5; usw. ineinandergedreht werden. Vorteilhafterweise können dabei mehrere Drähte gleichzeitig gebogen und anschliessende ineinandergedreht werden.

Die Drähte 2, 3, 4, 5 sind gemäss Fig. 2 an ihren Enden paarweise gelenkig miteinander verbunden, wozu die Enden der ineinandergedrehten Drähte bzw. Spiralen zu Schlaufen 2', 3', 4', 5' gebogen oder geknotet werden. Insbesondere die geknoteten Enden ermöglichen eine kostengünstige kraftschlüssige Verbindung mit Nachbarnetzen. Anstelle der Knoten können auch andersartige Endschlaufenverbindungen der Drahtenden der einzelnen Spiralen (z.B. mit Pressverbindungen) verwendet werden.

Die gelenkige Verbindung einzelner Drähte 2, 3, 4, 5 ermöglicht, dass sich das Drahtgeflecht 1 für die Lagerung und den Transport zusammenrollen oder zusammenlegen lässt.

Die Drähte 2, 3, 4, 5 bestehen vorzugsweise aus rostfreiem Stahl (beispielsweise Inox) oder aus korrosionsbeständigem Stahl, bei dem die Korrosionsbeständigkeit durch eine geeignete Beschichtung, zum Beispiel Zink-/Aluminium oder Kupferlegierungen bzw. durch einen Überzug (beispielsweise Kunststoff- oder Cladding-Beschichtungen) erreicht wird. Ebenso sind Kombinationen von verschiedenen Beschichtungsverfahren möglich. Das erfindungsgemässe aus Drahtgeflecht bestehende Netz ist damit bezüglich der Verschmutzung, dem Anwachsen und Verstopfung durch Wassertiere und - Pflanzen wie beispielsweise Algen, Seegras, Moos,. Muscheln etc. wesentlich weniger anfällig als herkömmliche Netze aus Kunststoff. Diesbezüglich besonders vorteilhaft ist die Verwendung von Drähten aus kupferbeschichtetem Stahl für das Drahtgeflecht 1.

Anstelle des einfachen Drahtes können auch Seile, Litzen oder ähnliche Materialen für die Netzherstellung verwendet werden. Bei der Verwendung von Seilen und Litzen ist es nicht notwendig, dass sämtliche Drähte der Seil- oder Litzenkonstruktion aus hochfesten Drähten mit Nennfestigkeiten von 1000 N/mm² bis ca. 2800 N/mm² bestehen müssen.

Bei der in Fig. 2 und 3 gezeigten Ausführung ist die Dicke des Drahtgeflechts 1 durch den Durchmesser die Zylinderform definiert. Das Netz 11 lässt relativ hohe Dehnungen und Aufweitungen zu. Die Produktionsleistung bei der Netzherstellung ist insbesondere durch den kontinuierlichen Drahtvorschub gross. Zudem können mehrere Spiralen gleichzeitig hergestellt und ineinandergedreht werden, was die Herstellungszeiten um ein Mehrfaches verkleinert, wodurch die Herstellungskosten massiv gesenkt werden können.

Bei einer weiteren möglichen Ausführungsform des erfindungsgemässen Netzes gemäss Fig.4 wird das aus den in die zylinderförmigen Raumspiralen gebogenen Drähten 22, 23, 24, 25 geflochtene Drahtgeflecht 20 anschliessend nachbearbeitet, beispielsweise flachgedrückt. Bei diesem im Vergleich zu der Ausführung nach Fig. 2 und Fig. 3 weniger dicken, flacheren, jedoch nach wie vor dreidimensionalen Netz ist für die gleiche Fläche weniger Draht erforderlich. Das Netz lässt dann allerdings weniger Dehnungen und Aufweitungen zu, was jedoch je nach Anwendungsart auch ein entscheidender mechanischer oder optischer Vorteil sein kann. Da nach dem Flachdrücken die verbogenen Spiralen leicht rückfedern, muss dieser Vorgang über die gesamte Netzfläche etappiert durchgeführt werden. Im Hinblick auf den für das Rückbiegen benötigten Raum ist die Möglichkeit der gleichzeitigen Herstellung von mehreren Spiralen begrenzt.

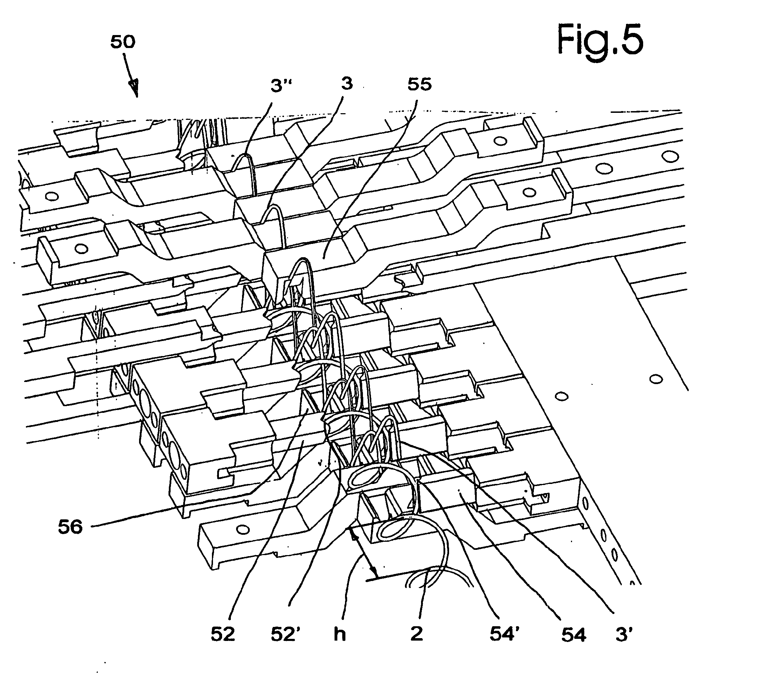

Gemäss Fig. 5 ist ausschnittweise eine perspektivische Ansicht einer Biegevorrichtung 50 für das Flachdrücken eines wendelförmig gebogenen Drahtes 2 vorgesehen. Eine Teilvorrichtung für die Herstellung der wendelförmig gebogenen Drähten ist nicht näher gezeigt. Der wendelförmig gebogene Draht 2 ist hierbei annähernd zylinderförmig vorproduziert.

Die Biegevorrichtung 50 weist zweireihig angeordnete Stempel 52, 54 auf, die quer zur Längserstreckung des wendelförmigen Drahtes 2 gegeneinander verstellbar und jeweils an der vorderen Stirnseite mit einer den Draht 2 zentrierenden Führungsnut 52', 54' versehen sind. Diese von einem steuerbaren Antrieb hin- und herschiebbaren Stempel 52, 54 sind in zwei Reihen gegeneinander gerichtet und zueinander in einem Abstand entsprechend der Steigungshöhe h der einzelnen Wendel des Drahtes 2 angeordnet, so dass sie den mit einer bestimmten Länge versehenen wendelförmigen Draht 2 bei jedem Wendel seitlich umgreifen. In der veranschaulichten Greifposition weisen die Stempel der einen Reihe zur andern eine solche Distanz auf, dass der wendelförmige Draht 2 in diese Führungsnuten 52', 54' der Stempel 52, 54 eingedreht werden kann. Beim Eindrehen des Drahtes 2 erfolgt mit Vorteil gleichzeitig ein Einfädeln in den bereits zusammengedrückten Draht 3, wodurch das Netz auf diesem Wege erzeugt wird. Im Prinzip könnten die Stempel aber noch weiter auseinandergeschoben sein und der vorgeformte Draht 2 könnte dann eingelegt werden. Ausgehend von dieser Greifposition werden dann zumindest die Stempel 52 oder 54 der einen Reihe gegen die andern Stempel 54 oder 52 um eine bestimmte Distanz verstellt und hierbei der wendelförmige Draht zusammengedrückt, so dass bei den einzelnen Wendeln jeweils annähernd gerade Drahtabschnitte 3' erzeugt sind, und dass das aus diesen zusammengesetzte Netz eine matratzenartige Struktur aufweist.

Oberhalb und unterhalb dieser Stempel 52, 54 sind zusätzliche Biegewerkzeuge 55, 56 vorgesehen, die ebenfalls quer zur Längserstreckung der wendelförmigen Drähte 2, 3 verstellbar sind, welche derart angeordnet sind, dass sie nach dem Zusammendrücken der wendelförmigen Drähte 3 eine Rückbiegung der wendelförmigen Drähte 3 bei den gebildeten Bogen 3" erzeugen. Damit wird eine optimale Form dieser Drähte 2, 3 erzeugt. Die Biegewerkzeuge 55, 56 dienen ausserdem als Auflage des wendelförmigen Drahtes 2, so dass dieser während dem Zusammendrücken nicht nach oben oder unten weggedrückt werden kann.

Mit dieser Biegevorrichtung 50 ist im Rahmen der Erfindung ein rationelles und verschiedene Grössen von wendelförmigen Drähten zulassende Fertigung gewährleistet.

Das erfindungsgemässe, als ein Drahtgeflecht ausgebildete Netz, das aus einzelnen wendelförmig (oder wendelformähnlich) zu einer zylinderförmigen (oder zylinderformähnlichen) Raumspirale gebogenen metallenen Drähten hergestellt wird, und bei dem die benachbarten Drähte bzw. Spiralen ineinandergedreht werden, ist herstellungstechnisch einfach und kostengünstig. Die Drähte werden kontinuierlich zu den zylinderförmigen Raumspiralen gebogen. Vorteilhafterweise können mehrere Drähte bzw. Spiralen gleichzeitig erzeugt und ineinandergedreht werden.

Bei mindestens einigen der miteinander verflochtenen Drähten kann durch den Anlenkungsbereich der beiden wendelförmigen zusammengeflochtenen Drähten hindurch ein im wesentlichen gerades längliches Verstärkungselement geführt sein, durch welches die gebildeten rautenförmigen Maschen in dreieckige Maschen aufgeteilt sind.

Anstelle von Drähten könnten auch andere Längselemente, wie zum Beispiel Seile oder Litzen oder eine Kombination daraus oder aber Bänder, Rohre, Bleche etc. verwendet werden.

## Patentansprüche

1. Netz, für einen Korb für Fischzucht, welcher im Meereswasser oder Süsswasser stationierbar ist, oder für den Schutz- oder für den Sicherheitsbereich, zum Beispiel für Abbremsvorgänge im Naturgefahrenbereich, als Abdeckung in der Sicherheitstechnik, für Splitterschutz und/oder ähnlichem, oder für die Architektur, wobei das Netz als ein Geflecht (1) ausgebildet ist, welches aus einzelnen wendelförmig oder ähnlichem gebogenen Längselementen herstellbar ist, wobei die benachbarten Längselemente, wie Drähte (2, 3; 3, 4; 4, 5), jeweils zusammengeflochten sind,
**dadurch gekennzeichnet, dass**
einzelne zu einer Zylinder- bzw. Schraubenform oder ähnlichem gebogenen Längselemente mit benachbarten ineinandergedreht und derart zusammengedrückt sind, dass bei den einzelnen gebogenen Längselementen jeweils annähernd gerade Drahtabschnitte (3`) erzeugt sind.

2. Netz nach Anspruch 1, **dadurch gekennzeichnet, dass** die Längselemente aus den metallenen Drähten (2, 3, 4, 5) und/oder aus Seilen und/oder Litzen bestehen, welche aus korrosionsbeständigen, rostfreiem oder korrosionsschutzbeschichtetem Stahl bestehen.

3. Netz nach Anspruch 2, **dadurch gekennzeichnet, dass** die Drähte (2, 3, 4, 5) aus Stahl bestehen, welcher mit Kupfer oder Kupferlegierungen beschichtet ist.

4. Netz nach einem der Ansprüche 1 bis 3, **dadurch gekennzeichnet, dass** das ausgehend von dem wendelförmig oder ähnlichem hergestellten Drahtgeflecht (1) zu einem flacheren, jedoch nach wie vor dreidimensionalem Drahtgeflecht zusammendrückbar ist.

5. Netz nach einem der Ansprüche 1 bis 4, **dadurch gekennzeichnet, dass** die Drähte (2, 3, 4, 5) an ihren Enden paarweise gelenkig miteinander verbunden sind, wozu die Enden der ineinandergedrehten Drähte zu Schlaufen (2', 3', 4', 5') geknotet sind.

6. Netz nach einem der Ansprüche 1 bis 5, **dadurch gekennzeichnet, dass** die Drähte (2, 3, 4, 5) und/oder die Seile und/oder die Litzen aus hochfestem Stahl bestehen, insbesondere mit einer Nennfestigkeit von 1000 N/mm² bis 2800 N/mm².

7. Netz nach einem der Ansprüche 1 bis 6, **dadurch gekennzeichnet, dass** bei mindestens einigen der miteinander verflochtenen Längselementen durch den Anlenkungsbereich der beiden wendelförmig zusammengeflochtenen Längselemente hindurch ein im wesentlichen gerades längliches Verstärkungselement geführt ist, durch welches die gebildeten rautenförmigen Maschen in dreieckige oder dreieckartige Maschen aufgeteilt sind.

8. Verfahren zur Herstellung eines Netzes nach einem der Ansprüche 1 bis 7, **dadurch gekennzeichnet, dass** einzelne Längselemente kontinuierlich zu einer Zylinderform oder ähnlichem gebogen werden, wobei die benachbarten Längselemente wie Drähte (2, 3; 3, 4; 4, 5) ineinandergedreht werden.

9. Verfahren nach Anspruch 8, **dadurch gekennzeichnet, dass** gleichzeitig mehrere schraubenförmige Wendel aus den Längselementen erzeugt und ineinandergedreht werden.

10. Verfahren nach Anspruch 8 oder 9, **dadurch gekennzeichnet, dass** die auf eine bestimmte Länge geschnittenen wendelförmigen Drähte mit ihren Enden der ineinandergedrehten Drähte (2, 3; 3, 4; 4, 5) zu Schlaufen (2', 3', 4', 5') gebogen oder geknotet werden, um die Drähte paarweise gelenkig miteinander zu verbinden.

11. Verfahren nach einem der Ansprüche 8 bis 10, **dadurch gekennzeichnet, dass** das aus den in die zylinderförmigen Raumspiralen gebogenen Drähten (2, 3, 4, 5) geflochtene Drahtgeflecht (1) flachgedrückt wird.

12. Vorrichtung zur Durchführung des Verfahrens nach einem der Ansprüche 8 bis 11, **dadurch gekennzeichnet, dass** eine Teilvorrichtung zur Herstellung von wendelförmig gebogenen Drähten (2, 3) und eine separate Biegevorrichtung (50) für das Flachdrücken der wendelförmig gebogenen Drähte (2, 3) vorgesehen sind.

13. Vorrichtung nach Anspruch 12, **dadurch gekennzeichnet, dass** die Biegevorrichtung (50) die wendelförmig gebogenen Drähte (2, 3) derart zusammendrückt, dass bei den einzelnen Wendeln jeweils annähernd gerade Drahtabschnitte (3') erzeugt sind, und dass das aus diesen zusammengesetzte Netz eine matratzenartige Struktur aufweist.

14. Vorrichtung nach Anspruch 12 oder 13, **dadurch gekennzeichnet, dass** die Biegevorrichtung (50) reihenweise angeordnete Stempel (52, 54) aufweist, die quer zur Längserstreckung der wendelförmigen Drähte (2, 3) gegeneinander verstellbar und jeweils an der vorderen Stirnseite mit einer den Draht zentrierenden Führungsnut (52', 54') versehen sind, wobei die Stempel (52, 54) zueinander in einem Abstand entsprechend der Steigungshöhe (h) der einzelnen Wendel angeordnet sind und um einen vorgegebenen Hub von einer Greifposition, in der ein wendelförmiger Draht in diese Führungsnuten der Stempel eindrehbar oder einlegbar ist, in eine Biegeposition, in welcher der wendelförmige Draht (2, 3) zusammengedrückt wird, verstellbar sind.

15. Vorrichtung nach einem der Ansprüche 12 bis 14, **dadurch gekennzeichnet, dass** zusätzliche Biegewerkzeuge (55, 56) vorgesehen sind, die ebenfalls quer zur Längserstreckung der wendelförmigen Drähte (2, 3) verstellbar sind, welche derart angeordnet sind, dass sie nach dem Zusammendrücken der wendelförmigen Drähte bei der Verstellung eine Rückbiegung der wendelförmigen Drähte bei den gebildeten Bogen (3") erzeugen.

## Claims

1. A net, in particular for a basket for pisciculture, which may be placed in sea or fresh water, or for the protection and safety, for example for retarding processes in the field of natural dangers, as a cover in safety technology, for shatter protection and/or similar, or in architecture, whereby the net is made of a mesh (1), which can be produced from individual spirally or similarly bent longitudinal elements, the adjacent longitudinal elements, such as wires (2, 3; 3, 4; 4, 5), respectively being interwoven, **characterised in that**
individual longitudinal elements, which are bent to form a cylinder-respectively a screw-shape or similar, are rotated one into each other with adjacent longitudinal elements and are compressed such that with the individual bent longitudinal elements almost straight wire sections (3') are respectively produced.

2. The net according to Claim 1, **characterised in that** the longitudinal elements are made of the metal wires (2, 3, 4, 5) and/or of ropes and/or cords which are made of corrosion-resistant, stainless or corrosion protection-coated steel.

3. The net according to Claim 2, **characterised in that** the wires (2, 3, 4, 5) are made of steel which is coated with copper or copper alloys.

4. The net according to any of Claims 1 to 3, **characterised in that** the wire material (1) which is initially produced in a spiral or similar form can be compressed to form a flatter, yet still three-dimensional wire material.

5. The net according to any of Claims 1 to 4, **characterised in that** the wires (2, 3, 4, 5) are connected to one another flexibly in pairs at their ends, for which purpose the ends of the interwoven wires are knotted to form loops (2', 3', 4', 5').

6. The net according to any of Claims 1 to 5, **characterised in that** the wires (2, 3, 4, 5) and/or the ropes and/or the cords are made of high-strength steel, in particular with a nominal strength of 1000 N/mm² to 2800 N/mm².

7. The net according to any of Claims 1 to 6, **characterised in that** with at least some of the interwoven longitudinal elements a substantially straight longitudinal reinforcement element is guided through the linkage region of the two spiral interwoven longitudinal elements by means of which the meshes formed in diamond shapes are divided into triangular or triangle-like meshes.

8. A method for producing a net according to any of Claims 1 to 7, **characterised in that** individual longitudinal elements are continuously bent to form a cylinder shape or similar, the adjacent longitudinal elements such as wires (2, 3; 3, 4; 4, 5) being rotated one into each other.

9. The method according to Claim 8, **characterised in that** a number of screw-shaped spirals are produced from the longitudinal elements and are rotated one into each other at the same time.

10. The method according to Claim 8 or 9, **characterised in that** the spiral wires cut to a specific length are bent or knotted to form loops (2', 3', 4', 5') with their ends of the interwoven wires (2, 3; 3, 4; 4, 5) in order to connect the wires to one another flexibly in pairs.

11. The method according to any of Claims 8 to 10, **characterised in that** the wire material (1) woven from the wires (2, 3, 4, 5) bent into the cylindrical spatial spirals is pressed flat.

12. A device for implementing the method according to any of Claims 8 to 11, **characterised in that** a partial device for producing spirally bent wires (2, 3) and a separate bending device (50) for pressing the spirally bent wires (2, 3) flat are provided.

13. The device according to Claim 12, **characterised in that** the bending device (50) compresses the spirally bent wires (2, 3) such that with the individual spirals almost straight wire sections (3') are respectively produced, and that the net composed from the latter has a mattress-like structure.

14. The device according to Claim 12 or 13, **characterised in that** the bending device (50) has stamps (52, 54) arranged in rows which can be moved in relation to one another laterally to the longitudinal extension of the spiral wires (2, 3) and are provided respectively on the front face side with a guiding groove (52', 54') centering the wire, the stamps (52, 54) being arranged a distance apart from one another according to the gradient height (h) of the individual spirals, and lifted a predetermined amount from a gripping position, in which a spiral wire can be turned or inserted into these guiding grooves of the stamps, into a bending position in which the spiral wire (2, 3) is compressed.

15. The device according to any of Claims 12 to 14, **characterised in that** additional bending tools (55, 56) are provided which can also be moved laterally to the longitudinal extension of the spiral wires (2, 3) which are arranged such that when moved they produce bending back of the spiral wires with the bends (3") formed after the compression of the spiral wires.

## Revendications

1. Filet pour un panier pour la pisciculture, pouvant être placé dans l'eau de mer ou dans l'eau douce, ou pour une zone protégée ou de protection, par exemple comme barrières dans les zones de dangers naturels, comme recouvrement dans l'ingénierie de la sécurité, comme pare-éclats et/ou similaire, ou pour l'architecture, le filet étant conçu comme treillis (1) fabricable à partir d'éléments individuels longitudinaux courbés en forme d'hélice ou similaire, les éléments longitudinaux voisins comme les fils (2, 3; 3, 4; 4, 5) respectivement étant tressés l'un à l'autre,
**caractérisé en ce que**
des éléments individuels longitudinaux sont retordus avec des éléments voisins en forme cylindrique ou d'hélice ou similaire et comprimés de façon qu'au niveau des éléments individuels longitudinaux soient formées des sections de fils (3') à peu près droites.

2. Filet selon la revendication 1, **caractérisé en ce que** les éléments longitudinaux se composent de fils métalliques (2, 3, 4, 5) et/ou de câbles et/ou de torons réalisés en acier résistant à la corrosion, inoxydable ou revêtu d'une protection anti-corrosion.

3. Filet selon la revendication 2, **caractérisé en ce que** les fils (2, 3, 4, 5) sont réalisés en acier étant revêtu de cuivre ou d'un cuproalliage,

4. Filet selon l'une des revendications 1 à 3, **caractérisé en ce que** le treillis de fil métallique (1) formé par des fils en hélice ou similaire est comprimable en un treillis de fil métallique plus plat mais toujours tridimensionnel.

5. Filet selon l'une des revendications 1 à 4, **caractérisé en ce que** les fils (2, 3, 4, 5) au niveau de leurs bouts sont reliés par paires de façon articulée de sorte que les fils retordus soient noués en boucles (2', 3', 4', 5').

6. Filet selon l'une des revendications 1 à 5 **caractérisé en ce que** les fils (2, 3, 4, 5) et/ou les câbles et/ou les torons sont en acier à haute résistance, en particulier avec une résistance nominale de 1 000 N/mm² à 2 800 N/mm².

7. Filet selon l'une des revendications 1 à 6, **caractérisé en ce qu'**au niveau d'au moins quelques-uns des éléments longitudinaux tressés ensemble, un élément de renfort sensiblement droit oblong est passé à travers la liaison articulée des deux éléments longitudinaux tressés ensemble en forme d'hélice par lequel les mailles rhombiques formées sont divisées en mailles triangulaires ou de forme triangulaire.

8. Procédé pour la fabrication d'un filet selon l'une des revendications 1 à 7, **caractérisé en ce que** des éléments longitudinaux individuels sont cintrés en continu en une forme cylindrique ou similaire pendant que les éléments longitudinaux voisins comme les fils (2, 3; 3, 4; 4, 5) sont retordus.

9. Procédé selon la revendication 8, **caractérisé en ce que** plusieurs hélices en forme de spirale sont produites en même temps à partir des éléments longitudinaux et sont retordues.

10. Procédé selon l'une des revendications 8 ou 9, **caractérisé en ce que** les fils en hélice coupés à une longueur définie par leurs bouts des fils retordus (2, 3; 3, 4; 4, 5) sont cintrés ou noués en boucles (2', 3', 4', 5') pour relier les fils par paires de façon articulée.

11. Procédé selon l'une des revendications 8 à 10, **caractérisé en ce que** le treillis en fil métallique (1) tressé à partir des fils (2, 3, 4, 5) courbés en forme d'hélice circulaire est aplati.

12. Dispositif pour la mise en oeuvre du procédé selon l'une des revendications 8 à 1,1 **caractérisé en ce que** sont prévus un dispositif partiel pour la fabrication de fils (2, 3) courbés en hélice et un dispositif de cintrage (50) séparé pour aplatir les fils (2, 3) courbés en hélice.

13. Dispositif selon la revendication 12 **caractérisé en ce que** le dispositif de cintrage (50) comprime les fils (2, 3) courbés en hélice de façon à ce que sur les hélices individuelles soient formées des sections de fil (3') à peu près droites et que le filet composé par ceux-ci présente une structure de matelas.

14. Dispositif selon l'une des revendications 12 ou 13 **caractérisé en ce que** le dispositif de cintrage (50) présente des poinçons (52, 54) disposés en lignes réglables les uns par rapport aux autres perpendiculairement à l'extension longitudinale des fils (2, 3) courbés en hélice et disposant respectivement sur leur face frontale d'une rainure de guidage (52', 54') centrant le fil, les poinçons (52, 54) étant disposés avec un écart les un par rapport aux autres correspondant au pas hélicoïdal (h) des hélices individuelles et réglables d'une course déterminée d'une position de préhension à partir de laquelle un fil en hélice peut être vissé ou placé dans cette rainure de guidage des poinçons à une position de cintrage à partir de laquelle le fil en hélice (2, 3) est comprimé.

15. Dispositif selon l'une des revendications 12 à 14 **caractérisé en ce que** sont prévus des outils de cintrage (55, 56) supplémentaires également réglables perpendiculairement à l'extension longitudinale des fils (2, 3) courbés en hélice, disposés de façon à ce qu'ils après la compression des fils en hélice lors d'un ajustage provoquent une flexion en arrière des courbes (3") formées.
